# EUROPÄISCHE PATENTANMELDUNG

(11) **EP 0 823 445 A1**
(43) Veröffentlichungstag der Anmeldung: **11.02.1998**
(21) Anmeldenummer: 97112935.8
(22) Anmeldetag: 28.07.1997
(51) Int. Cl.: C08G 18/02

(54) **Verfahren zur Polymerisation von Isocyanaten**

(30) Priorität: 07.08.1996 DE 19631859
(71) Anmelder: BAYER AG, 51368 Leverkusen (DE)
(72) Erfinder: Nefzger, Hartmut, Dr., New Martinsville, WV 26155 (US); Quiring, Bernd, Dr., 51377 Leverkusen (DE)

(57) **Zusammenfassung**

Isocyanate werden auf einfache Weise polymerisiert, indem man aliphatische und/oder aromatische Isocyanate in Gegenwart von Metallocenen bei Temperaturen von 20 bis 220 °C, gegebenenfalls unter erhöhtem oder vermindertem Druck und gegebenenfalls in Anwesenheit eines inerten organischen Lösungsmittels, polymerisiert, wobei die Metallocene in einer Menge von 5 bis 50 000 ppm, bezogen auf die Menge an eingesetzten Isocyanaten, eingesetzt werden.

## Beschreibung

Die vorliegende Erfindung betrifft ein Verfahren zur Polymerisation von Isocyanaten in Gegenwart von Metallocen-Katalysatoren.

Die Polymerisation von Isocyanaten ist bekannt und beispielsweise beschrieben im Kunststoff-Handbuch, Band 7 (Polyurethane), 3. Auflage, S. 14ff, Carl-Hanser-Verlag, München, Wien, 1993. Von besonderem technischen Interesse ist dabei die Trimerisation von Isocyanaten zu Isocyanuraten, da diese auch bei höheren Temperaturen sehr stabil sind. Die Polymerisation bzw. Trimerisation der Isocyanate erfolgt dabei u.a. in Gegenwart starker Basen, wie Alkaliacetate oder -formiate. Nachteilig bei der durch starke Basen katalysierten Polymerisation von Isocyanaten ist insbesondere die Möglichkeit eines dadurch hervorgerufenen. chemischen Abbaus der Kunststoffe. Bekannt ist z.B. der alkalisch katalysierte hydrolytische Abbau von Urethan-, Harnstoff- und Estergruppen.

Aufgabe der vorliegenden Erfindung ist es daher, die oben genannten Nachteile bei der Polymerisation von Isocyanaten zu vermeiden und ein im Hinblick auf die Herstellung von PUR-Kunststoffen mit Anteilen polymerer Isocyanate technisch besonders vorteilhaftes Verfahren zur Verfügung zu stellen.

Gegenstand der vorliegenden Erfindung ist daher ein Verfahren zur Polymerisation von Isocyanaten, das dadurch gekennzeichnet ist, daß man aliphatische und/oder aromatische Isocyanate in Gegenwart von Metallocenen der allgemeinen Formel

ML₂,

worin
- M: für Nickel oder Kobalt
sowie
- L: für einen gegebenenfalls ein- oder mehrfach substituierten Cyclopentadienyl-, Indenyl-, Naphthalin- oder Benzolrest stehen und wobei die Liganden L durch eine oder mehrere Kohlenwasserstoffbrücken mit 2 bis 4 Kohlenstoffatomen verbrückt sein können,
bei Temperaturen von 20 bis 220°C, gegebenenfalls unter erhöhtem oder vermindertem Druck und gegebenenfalls in Anwesenheit eines inerten organischen Lösungsmittels, polymerisiert, wobei die Metallocene in einer Menge von 5 bis 50 000 ppm, bezogen auf die Mengen an eingesetzten Isocyanaten, eingesetzt werden.

Die Liganden L der allgemeinen Formel ML₂ können insbesondere durch C₁-C₅-Alkylreste, bevorzugt Methylreste, substituiert sein. Falls die Liganden L durch Kohlenwasserstoffbrücken verbrückt sind, ist die einfache Verbrückung mit Kohlenwasserstoffbrücken mit 2 Kohlenstoffatomen bevorzugt. Bevorzugt ist in der Formel ML₂ als Metall M Kobalt und Nickel, insbesondere Kobalt, und als Ligand L der Cyclopentadienylrest.

Das erfindungsgemäße Verfahren wird bevorzugt bei Temperaturen von 20 bis 200°C durchgeführt. Dabei kann es in Abhängigkeit der Siedepunkte der eingesetzten Isocyanate von Vorteil sein, unter Druck (bis 200 bar) sowie gegebenenfalls bei Unterdruck (>0,01 mbar) zu arbeiten.

Je nach der gewählten Verfahrensweise kann es darüber hinaus von Vorteil sein, in Anwesenheit eines inerten organischen Lösungsmittels, wie z.B. (cyclo)aliphatische, araliphatische, aromatische Kohlenwasserstoffe, Ether, Ester und/oder Oligo-/Polyether- bzw. -ester, zu arbeiten. Als Lösungsmittel werden insbesondere eingesetzt: Hexan, Cydohexan, Tetraethylenglykoldiemthylether, Toluol und Essigsäure. Die optimale Menge an eingesetztem Lösungsmittel kann dabei leicht durch entsprechende Vorversuche bestimmt werden.

Bei dem erfindungsgemäßen Verfahren werden die Metallocene der oben genannten Formel bevorzugt in einer Menge von 10 bis 10 000, insbesondere 50 bis 5 000 ppm, bezogen auf die Menge an eingesetzten Isocyanaten, eingesetzt.

Als aliphatische und/oder aromatische Isocyanate können in das erfindungsgemäße Verfahren alle in der Technik gebräuchlichen Isocyanate verwendet werden. In diesem Zusammenhang verweisen wir insbesondere auf W. Siefken, Justus Liebigs Annalen der Chemie 562, 75 - 136 (1949). Beispielsweise können in das erfindungsgemäße Verfahren als aliphatische und/oder aromatische Isocyanate eingesetzt werden: Burylendiisocyanat, Isophorondiisocyanat, Hexamethylendiisocyanat, Cyclohexan-1,4-diisocyanat, hydrierte Toluylendiisocyanate, Dicyclohexylmethandiisocyanat, Phenylendiisocyanat, 2,4- und 2,6-Toluylendiisocyanat, Phenylisocyanat, Isocyanate der Diphenylmethanreihe, 1,5-Naphthalindiisocyanat, p-Chlorphenylisocyanat, ancarbodiimidisiertes Triisopropylphenylendiisocyanat, bevorzugt Isocyanate der Diphenylmethanreihe, 2,4- und 2,6-Toluylendiisocyanat, 1,5-Naphthalindiisocyanat, 1,4-Phenylendiisocyanat sowie daraus hergestellte NCO-terminierte Prepolymere bzw. Semiprepolymere.

Das erfindungsgemäße Verfahren wird im allgemeinen in der Form durchgeführt, daß man die zu polymerisierenden Isocyanate vorlegt, gegebenenfalls in Anwesenheit eines geeigneten inerten organischen Lösungsmittels, und die MetallocenKatalysatoren in reiner Form oder gegebenenfalls gelöst in einem geeigneten inerten organischen Lösungsmittel den zu polymerisierenden Isocyanaten unter intensivem Mischen zudosiert.

Nach dem erfindungsgemäßen Verfahren ist es möglich, die Isocyanate quantitativ in kürzester Zeit zu polymerisieren bzw. zu stabilen Isocyanuraten zu trimerisieren, wobei die Polymerisation- bzw. Trimerisierungsreaktion, falls gewünscht, unterbrochen werden kann

### Beispiele

### Beispiel 1: Versuche mit MDI-Präpolymeren:

Ein aus einem Polyethylenadipat (Desmophen 2000®, OH-Zahl 56) sowie 4,4'-Diphenylmethandiisocyanat (Desmodur 44®, MDI) erhaltenes, NCO-terminiertes Semiprepolymer (theoret. NCO-Wert: 3,17 Gew.-% NCO) wurde bei 80°C mit den in Tabelle 1 aufgeführten Mengen einer zuvor bereiteten Cobaltocen (Dicyclopentadienyl-Cobalt)-Lösung (Cyclohexan) versetzt und bei 80°C polymerisiert.

Tabelle 1 gibt die zu Verfestigung notwendige Reaktionszeit wieder; im Falle der Zugabe von nur 50 ppm Cobaltocen (Beispiel 1.c.) erfolgte eine Viskositätserhöhung, während beim Vergleichsversuch (Beispiel 1.d.), die Viskosität nahezu unverändert blieb.

**Tabelle 1**

| Erfindungsgemäße Beispiele (1.a., 1.b., 1.c.) Polymerisation von MDI-Prepolymer mittels unterschiedlicher Mengen an Cobaltocen (gelöst in Cyclohexan); Reaktionstemperatur: 80°C | | | | | |
|---|---|---|---|---|---|
| Bsp. | Metallocen | Konzentration [ppm] | Reaktionszeit | Eigenschaften | Bemerkung |
| 1.a. | CoCp₂^{*)} | 500 | 1 Std. | verfestigt | |
| 1.b. | CoCp₂^{*)} | 100 | 8 Std. | verfestigt | |
| 1.c. | CoCp₂^{*)} | 50 | >24 Std. | hochviskos | |
| 1.d. | CoCp₂^{*)} | 0 | >24 Std. | viskos | Vergleichsversuch |

| | | | | | |
|---|---|---|---|---|---|
| *): Cobaltocen, Dicyclopentadienyl-Cobalt | | | | | |

Die in Tabelle 2 aufgeführten Beispiele zeigen anhand der Löslichkeit bzw. NichtLöslichkeit in DMSO (Dimethylsulfoxid), daß im Falle der Cobaltocen-Katalyse eine Vernetzung erfolgt, dagegen der Katalysator Octasoligen-Cobalt lösliche und damit weitestgehend unvernetzte Produkte ergibt.

**Tabelle 2**

| Versuche zur Polymerisation von MDI-Prepolymeren (NCO-Gehalt: 3,17 Gew.-%), mittels unterschiedlicher Typen von Katalysatoren; Reaktionstemperatur: 80°C. Die Katalysatoren wurden in Tetraethylenglykoldimethylether gelöst. Beispiel 1.f.: Vergleichsversuch (nicht erfindungsgemäß). | | | | | |
|---|---|---|---|---|---|
| Bsp. | Katalysator | Konzentration [ppm] | Reaktionszeit [Std.] Beobachtung | Reaktionszeit [Std.] Beobachtung | Löslichkeit in DMSO^{***)} |
| 1.e. | CoCp₂^{*)} | 100 | 3 sehr hochviskos | 5 fest | unlöslich/starke Quellung |
| 1.f. | Octasoligen-Co^{**)} | 100 | 3 sehr hochviskos | 5 fest | löslich |

| | | | | | |
|---|---|---|---|---|---|
| *): Cobaltocen, Dicyclopentadienyl-Cobalt | | | | | |
| **): Cobalt-octanoat | | | | | |
| ***): Dimethylsulfoxid | | | | | |

### Beispiel 2:

### Versuche mit NDI (Desmodur 15®, Naphthylen-1,5-diisocyanat)-Prepolymeren:

Aus einem Polyethylenadipat (Desmophen 2000®, OH-Zahl 56) sowie Desmodur 15® (Kennzahl 190, NCO_{theoret.}: 3,17 Gew.-%) wurde bei ca. 120°C ein Prepolymer hergestellt, welches bei 120°C mit den in Tab. 3 aufgeführten Mengen an Cobaltocen-Lösung (Cyclohexan bzw. Tetraethylenglykoldimethylether) versetzt und polymerisiert wurde.

**Tabelle 3**

| Versuche zur Polymerisation von NDI-Prepolymeren ohne und mit unterschiedlichen Mengen und Darreichungsformen an Cobaltocen; Reaktionstemperatur: 120°C. | | | | | |
|---|---|---|---|---|---|
| Metallocen | Konzentration [ppm] | Lösungsmittel | Reaktionszeit | Eigenschaften | Bemerkung |
| CoCp₂^{*)} | 500 | Cyclohexan | 1 Std. | verfestigt | DMSO^{**)}-unlösl. |
| CoCp₂^{*)} | 100 | Cyclohexan | <8 Std. | verfestigt | DMSO-unlösl. |
| CoCp₂^{*)} | 50 | Cyclohexan | <8 Std. | verfestigt | DMSO-unlösl. |
| | | | <8 Std. | verfestigt | Vgl.-Versuch, DMSO-löslich |
| | | | | | |
| CoCp₂^{*)} | 500 | TEGDME®^{***)} | 0,3 Std. | verfestigt | DMSO-unlösl. |
| CoCp₂^{*)} | 100 | TEGDME®^{***)} | 2 Std. | verfestigt | DMSO-unlösl. |
| CoCp₂^{*)} | 50 | TEGDME®^{***)} | <8 Std. | verfestigt | DMSO-unlösl. |
| | | | <8 Std. | verfestigt | Vgl.-Versuch, DMSO-löslich |

| | | | | | |
|---|---|---|---|---|---|
| *): Cobaltocen, Dicyclopentadienyl-Cobalt | | | | | |
| **): DMSO: Dimethylsulfoxid | | | | | |
| ***): Tetraethylenglykoldimethylether | | | | | |

### Beispiel 3:

### Versuche mit p-Tolylisocyanat:

Frisch destilliertes p-Tolyisocyanat wurde in einem Glaskolben unter Stickstoff mit dem jeweiligen Metallocen unter Rühren versetzt, der Glaskolben wurde verschlossen und auf die Reaktionstemperatur von 50°C erwärmt. Nach verschiedenen Reaktionszeiten wurden Proben entnommen und IR-Spektren aufgezeichnet. Der Umsatz in Tabelle 4 wird dann mit "quantitativ" angegeben, wenn die NCO-Absorptionsbande nicht mehr zu erkennen war.

**Tabelle 4**

| Versuche zur Polymerisation von p-Tolylisocyanat in Gegenwart von unterschiedlichen Mengen an Cobaltocen und Nickelocen; Reaktionstemperatur: 25°C; Vergleichsversuch mit Octasoligen-Cobalt. | | | |
|---|---|---|---|
| Metallocen/Katalysator | Konzentration [ppm] | Reaktionszeit | Umsatz |
| CoCp₂^{*)} | 10 000 | 1 sec. | quantitativ |
| CoCp₂^{*)} | 500 | 10 min. | quantitativ |
| CoCp₂^{*)} | 100 | 30 min. | quantitativ |
| CoCp₂^{*)} | 50 | ca. 4 Std. | quantitativ |
| Octasoligen-Co^{**)} | 1 000 | 24 Std. | nein |
| NiCp₂^{***)} | 10 000 | 10 Std. | quantitativ |

| | | | |
|---|---|---|---|
| *): Cobaltocen (Dicyclopentadienyl-Cobalt) wurde als 1 %ige Cyclohexan-Lösung eingesetzt: spätere Versuche zeigten, daß z.B. Tetraethylenglykoldimethylether deutlich besser als Lösungsmittel geeignet ist. | | | |
| **): Cobalt-octanoat | | | |
| ***) Nickelocen, Dicyclopentadienyl-Nickel | | | |

## Patentansprüche

1. Verfahren zur Polymerisation von Isocyanaten, dadurch gekennzeichnet, daß man aliphatische und/oder aromatische Isocyanate in Gegenwart von Metallocenen der allgemeinen Formel
ML₂,
worin
M für Nickel oder Kobalt
und
L für einen gegebenenfalls ein- oder mehrfach substituierten Cyclopentadienyl-, Indenyl-, Naphthalin- oder Benzolrest stehen und wobei die Liganden L durch eine oder mehrere Kohlenwasserstoffbrücken mit 2 bis 4 Kohlenstoffatomen verbrückt sein können,
bei Temperaturen von 20 bis 220°C, gegebenenfalls unter erhöhtem oder vermindertem Druck und gegebenenfalls in Anwesenheit eines inerten organischen Lösungsmittels, polymerisiert, wobei die Metallocene in einer Menge von 5 bis 50 000 ppm, bezogen auf die Menge an eingesetzten Isocyanaten, eingesetzt werden.

2. Verfahren nach Anspruch 1, dadurch gekennzeichnet, daß man als Metallocene Dicyclopentadienyl-Cobalt und/oder -Nickel einsetzt.

3. Verfahren nach Ansprüchen 1 und 2, dadurch gekennzeichnet, daß man bei Temperaturen von 20 bis 200°C arbeitet.

4. Verfahren nach Ansprüchen 1 bis 3, dadurch gekennzeichnet, daß man die Metallocene in einer Menge von 10 bis 10 000 ppm, bezogen auf eingesetzte Isocyanate, einsetzt.
